# EUROPEAN PATENT APPLICATION

(11) **EP 4 618 400 A1**
(43) Date of publication of application: **17.09.2025**
(21) Application number: 24208749.2
(22) Date of filing: 24.10.2024
(51) Int. Cl.: H02N 11/00

(54) **MANUFACTURING METHOD OF TRANSPIRATION-BASED POWER GENERATION DEVICE WITH IMPROVED WASHING RESISTANCE AND CONDUCTIVITY**

(30) Priority: 11.03.2024 KR 20240034157
(71) Applicant: Ajou University Industry-Academic Cooperation Foundation, Suwon-si, Gyeonggi-do 16499 (KR); Chung Ang University Industry Academic Cooperation Foundation, Seoul 06974 (KR)
(72) Inventor: HWANG, Byung Il, Seoul (KR); YUN, Tae Gwang, Gyeonggi-do (KR); YOON, Hyung Sub, Gyeonggi-do (KR)
(74) Representative: Laine IP Oy

(57) **Abstract**

Disclosed is a transpiration-driven power generation device with improved washing resistance and conductivity, the transpiration-driven power generation device including: a power generation part including silk yarns; a first electrode contacting the power generation part; a second electrode contacting the power generation part and spaced apart from the first electrode; and a connection circuit electrically connecting the first electrode and the second electrode to each other, wherein the power generation part includes a power generation material including poly(3,4-ethylenedioxythiophene)-poly(styrenesulfonate) (PEDOT:PSS) and a divinyl sulfone (DVS) as a crosslinker.

## Description

### BACKGROUND

### Field

The present disclosure relates to a method for manufacturing a transpiration-driven power generation device with improved washing resistance and conductivity.

### Description of Related Art

The technology of the present disclosure relates to the development of a yarn-based fiber-type renewable energy device based on the transpiration of plants. In particular, the yarn-based fiber-type renewable energy device based on the transpiration of plants has the characteristic of being able to generate direct current type power over a long period of time using a conductivity adsorption material with a large surface area that adsorbs ions in a polar solvent and a hydrophilic cotton fiber in which hydrogen ions rapidly migrate. The present disclosure utilizes the principle of generating power by utilizing a difference between potentials of an area that exists in water and an area that does not exist, and relates to an innovative new renewable energy technology in which a wet area that absorbs moisture and a dry area that is free of the moisture are distinguished from each other within the conductivity adsorption material.

Among the conductivity adsorption materials used conventionally, poly(3,4-ethylenedioxythiophene)-poly(styrenesulfonate) (PEDOT:PSS) has an abundance of SO₃²⁻ functional groups that strongly attract cations in the solution and has excellent electrical conductivity, and thus can maximize power generation. However, PEDOT:PSS has a disadvantage in that since the PSS component is hydrophilic, PEDOT:PSS is redispersed in water, thereby making it difficult for a TEPG (Transpiration Driven Electrokinetic Power Generator) device that uses water to achieve long-term power generation.

### SUMMARY

Therefore, the present disclosure newly develops a PEDOT:PSS-DVS active material containing a DVS crosslinker and provides a power generation device to which the novel active material is applied.

Thus, one purpose of the present disclosure is to provide a transpiration-driven power generation device with improved washing resistance and conductivity.

Another purpose of the present disclosure is to provide a method for manufacturing a transpiration-driven power generation device with improved washing resistance and conductivity.

Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

A first aspect of the present disclosure provides a transpiration-driven power generation device with improved washing resistance and conductivity, the transpiration-driven power generation device comprising: a power generation part including silk yarns; a first electrode contacting the power generation part; a second electrode contacting the power generation part and spaced apart from the first electrode; and a connection circuit electrically connecting the first electrode and the second electrode to each other, wherein the power generation part includes a power generation material including poly(3,4-ethylenedioxythiophene)-poly(styrenesulfonate) (PEDOT:PSS) and a divinyl sulfone (DVS) as a crosslinker.

In accordance with some embodiments of the transpiration-driven power generation device, a covalent bond is formed between the PSSs of the PEDOT:PSSs via the DVS.

In accordance with some embodiments of the transpiration-driven power generation device, the power generation material is applied on the silk yarns.

In accordance with some embodiments of the transpiration-driven power generation device, the first electrode contacting the power generation part is formed on a wet surface of the power generation part wet with water, wherein the second electrode spaced from the first electrode is formed on a dry surface of the power generation part free of water.

In accordance with some embodiments of the transpiration-driven power generation device, the power is generated from a potential difference between a potential of the first electrode and a potential of the second electrode due to a difference between wetness of the first electrode and wetness of the second electrode contacting the wet surface and the dry surface, respectively, wherein the generated power is output through the connection circuit.

In accordance with some embodiments of the transpiration-driven power generation device, liquid absorbed on the wet surface is a liquid in which NaCl is dissolved.

A second aspect of the present disclosure provides a method for manufacturing a transpiration-driven power generation device with improved washing resistance and conductivity, the method comprising: a first step of mixing poly(3,4-ethylenedioxythiophene)-poly(styrenesulfonate) (poly(3,4-ethylenedioxythiophene)-poly(styrenesulfonate) (PEDOT:PSS) and a divinyl sulfone (DVS) as a crosslinker with each other to prepare a PEDOT:PSS-DVS solution; and a second step of applying the PEDOT:PSS-DVS solution prepared in the first step to silk yarns.

In accordance with some embodiments of the method for manufacturing the transpiration-driven power generation device, the first step further includes stirring the prepared PEDOT:PSS-DVS solution for 25 to 35 minutes.

In accordance with some embodiments of the method for manufacturing the transpiration-driven power generation device, the second step includes: coating the silk yarns with the PEDOT:PSS-DVS solution by dipping the silk yarns into the PEDOT:PSS-DVS solution; and drying the coated PEDOT:PSS-DVS solution in an oven at 50 to 70°C for 25 to 35 minutes, thereby producing a power generation material including the silk yarns and the PEDOT:PSS-DVS coated thereon.

In accordance with some embodiments of the method for manufacturing the transpiration-driven power generation device, the method further comprises, after the second step, a third step of weaving the silk yarns having the PEDOT:PSS-DVS coated thereon with each other to form a fabric.

In accordance with some embodiments of the method for manufacturing the transpiration-driven power generation device, the method further comprises: a step of providing a power generation part including the power generation material; a step of forming a first electrode contacting the power generation part; and a step of forming a second electrode contacting the power generation part and spaced apart from the first electrode, wherein the first electrode is formed on a wet surface of the power generation part, and the second electrode is formed on a dry surface of the power generation part.

A third aspect of the present disclosure provides a wearable device comprising: the transpiration-driven power generation device having improved washing resistance and conductivity as described above; and a power storage device connected to the connection circuit of the power generation device and configured to power therefrom, wherein the power storage device further includes a power conversion unit configured to convert the received power into usable electricity.

A fourth aspect of the present disclosure provides a floating structure on a sea comprising: the transpiration-driven power generation device having improved washing resistance and conductivity as described above; and a power storage device connected to the connection circuit of the power generation device and configured to power therefrom, wherein the power storage device further includes a power transmission unit configured to transmit electric energy stored in the power storage device to a load.

According to the present disclosure, the transpiration-driven power generation device having excellent washing resistance and conductivity may be provided using the power generation material including the PEDOT:PSS and the DVS crosslinker. Furthermore, the power generation device may increase power production efficiency by utilizing water resources with high concentrations of cations/anions, such as body fluids in the human body and seawater.

In addition to the effects as described above, specific effects in accordance with the present disclosure will be described together with following detailed descriptions for carrying out the disclosure.

### BRIEF DESCRIPTION OF DRAWINGS

FIG. 1 illustrates a schematic diagram of PEDOT:PSS-DVS according to an embodiment of the present disclosure.
FIG. 2 illustrates a schematic diagram of a potential difference and a current flow direction of a power generation material including PEDOT:PSS-DVS according to an embodiment of the present disclosure.
FIG. 3 is a schematic diagram showing a method for manufacturing a power generation device according to an embodiment of the present disclosure.
FIGS. 4 to 6 are graphs showing experimental results on a power generation device according to an embodiment of the present disclosure.

### DETAILED DESCRIPTIONS

Hereinafter, PEDOT:PSS-DVS according to an embodiment of the present disclosure, a power generation device including the same according to an embodiment of the present disclosure, and a method for manufacturing the power generation device according to an embodiment of the present disclosure will be described with reference to the accompanying drawings.

Advantages and features of the present disclosure, and a method of achieving the advantages and features will become apparent with reference to embodiments described later in detail together with the accompanying drawings. However, an embodiment of embodiments of the present disclosure are not limited to the embodiments as disclosed under, but may be implemented in various different forms. Thus, these embodiments are set forth only to make the present disclosure complete, and to entirely inform the scope of the present disclosure to those of ordinary skill in the technical field to which the present disclosure belongs, and the present disclosure is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and an embodiment of embodiments of the present disclosure are not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

It will also be understood that when a first element or layer is referred to as being present "on" a second element or layer, the first element may be disposed directly on the second element or may be disposed indirectly on the second element with a third element or layer being disposed between the first and second elements or layers.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present disclosure relates to a transpiration-driven power generation device with improved washing resistance and conductivity, and specifically, to a power generation device using a PEDOT:PSS-DVS conductivity adsorption material as a new active material in which PSSs are crosslinked with each other via divinyl sulfone (DVS), and to a power generation device including the same.

According to an embodiment of the present disclosure, a transpiration-driven power generation device with improved washing resistance and conductivity comprises: a power generation part including silk yarns; a first electrode contacting the power generation part; a second electrode contacting the power generation part and spaced apart from the first electrode; and a connection circuit electrically connecting the first electrode and the second electrode to each other, wherein the power generation part includes a power generation material including poly(3,4-ethylenedioxythiophene)-poly(styrenesulfonate) (PEDOT:PSS), and divinyl sulfone (DVS) as a crosslinker.

In one embodiment of the present disclosure, a covalent bond may be formed between the PSSs of the PEDOT:PSSs via the DVS.

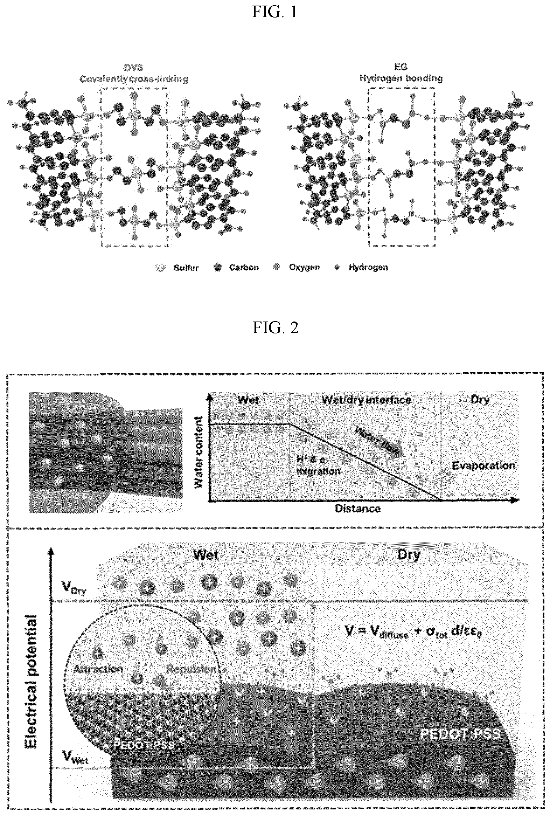

FIG. 1 illustrates a schematic diagram of PEDOT:PSS-DVS according to one embodiment of the present disclosure.

Referring to FIG. 1, when ethylene glycol (EG) is used as a material for connecting PSSs of PEDOT:PSSs to each other, the PSSs may be connected to each other by via a hydrogen bond. On the other hand, when a crosslinking agent for connecting PSSs to each other is DVS, a covalent bond may be formed between PSSs. In this regard, the covalent bond is known to be a stronger bond than the hydrogen bond. Therefore, when using DVS as the crosslinker, the power generation material having excellent washing resistance may be prepared.

In one embodiment of the present disclosure, the power generation material may be applied on the silk yarn.

The power generation material includes PEDOT:PSS and DVS. When the power generation material is applied on the silk yarn, the power generation part of a silk yarn structure may be manufactured. Furthermore, the silk yarns may be woven to form the power generation part in a form of a fabric. A wet surface that is wet with water and a dry surface that is not wet with water may be formed on the power generation part in the form of the fabric.

In one embodiment of the present disclosure, the first electrode that contacts the power generation part may be formed on the wet surface of the power generation part that is wet with water. The second electrode spaced from the first electrode may be formed on the dry surface of the power generation part that is not wet with water.

In one embodiment of the present disclosure, the power is generated from a potential difference between the potentials of the first electrode and the second electrode due to a difference between wetness of the first electrode and wetness of the second electrode that contact the wet surface and the dry surface, respectively. The generated power may be output through the connection circuit.

FIG. 2 illustrates a schematic diagram of a potential difference and a current flow direction of a power generation material including PEDOT:PSS-DVS according to one embodiment of the present disclosure.

Referring to FIG. 2, the wet surface and dry surface of the power generation part including the silk yarn to which the power generation material has been applied may be identified.

Specifically, the wet surface and the dry surface of the power generation part may adsorb ions in the solution asymmetrically. In other words, ions on the wet surface may be physically adsorbed on the surface of PEDOT:PSS to reduce the surface energy of PEDOT:PSS. Due to the negatively charged PSS, attractive and repulsive forces may act on the positive and negative ions on the wet surface, respectively, thereby enhancing the charge density on the wet surface of the PEDOT:PSS. Thus, a potential difference may be generated between the potential of the wet surface and the potential of the dry surface, such that the power is generated under the generated potential difference. The generated power may be collected by the first electrode and the second electrode which contact the wet surface and the dry surface, respectively, and may be output as electrical energy through the connection circuit. In this regard, the potential of the wet surface may be lower than that of the dry surface, so that the cations in the solution and the electrons in the PEDOT:PSS may migrate from the wet surface to the dry surface, thereby generating current.

In one embodiment of the present disclosure, the liquid absorbed on the wet surface may be a liquid in which NaCl is dissolved.

The power generation device according to the present disclosure may increase power generation in a NaCl environment such as sweat. In the NaCl environment, the concentration of ions in the solution in which NaCl is dissolved increases due to the separated salt ions, such that the difference between the charge density adsorbed on the wet surface and the charge density adsorbed on the dry surface may increase, and thus the potential difference therebetween increases. This increase in the potential difference enables high power generation. Furthermore, since the higher conductivity is achieved in the NaCl environment, the device has high energy generation performance.

Hereinafter, a method for manufacturing a transpiration-driven power generation (TDPG) device with improved washing resistance and conductivity according to one embodiment of the present disclosure will be described in detail.

The present disclosure provides a method for manufacturing the transpiration-driven power generation device with improved washing resistance and conductivity, the method including a first step of mixing poly(3,4-ethylenedioxythiophene)-poly(styrenesulfonate) (poly(3,4-ethylenedioxythiophene)-poly(styrenesulfonate) (PEDOT:PSS) and a divinyl sulfone (DVS) as a crosslinker with each other to prepare a PEDOT:PSS-DVS solution; and a second step of applying the PEDOT:PSS-DVS solution prepared in the first step to silk yarns.

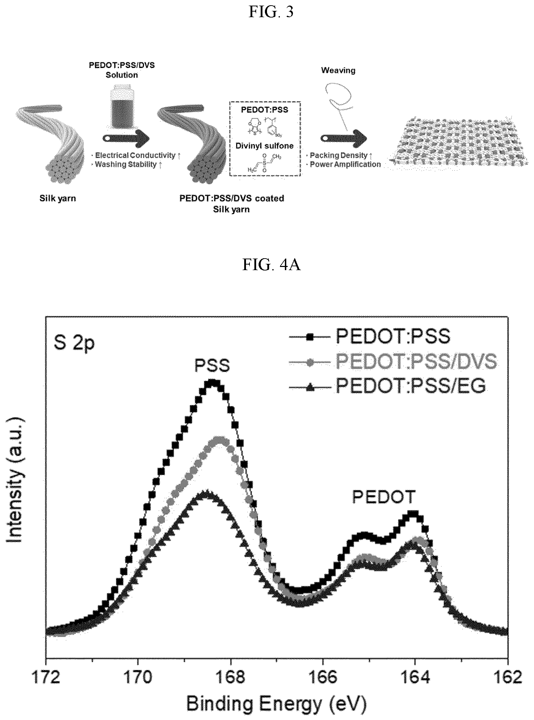

FIG. 3 is a schematic diagram showing a method for manufacturing a transpiration-driven power generation device with improved washing resistance and conductivity according to an embodiment of the present disclosure.

Referring to FIG. 3, the first step is a step of preparing the power generation material. In the first step, PEDOT:PSS and a DVS crosslinker are placed into a container and are mixed with each other to prepare the PEDOT:PSS-DVS solution as the power generation material.

In one embodiment of the present disclosure, the first step may further include a step of stirring the prepared PEDOT:PSS-DVS solution for 25 to 35 minutes. In the present disclosure, the stirring is preferably performed for 30 minutes using a stirrer.

Then, the second step may be a step of applying the power generation material onto the silk yarns.

In one embodiment of the present disclosure, the second step may include coating the silk yarns with the PEDOT:PSS-DVS solution by dipping the silk yarns into the PEDOT:PSS-DVS solution, and drying the coated solution in an oven at 50 to 70°C for 25 to 35 minutes. In the present disclosure, drying is preferably performed in an oven at 60°C for 30 minutes.

In one embodiment of the present disclosure, after the second step, a third step of weaving the silk yarns to which the PEDOT:PSS-DVS solution has been applied with each other to form a fabric may be further performed.

That is, the silk yarns to which the power generation material has been applied may be woven with each other such that the power generation part in the form of the fabric may be manufactured. The power generation part may have the wet surface that is wet with water and the dry surface that is not wet with water.

In one embodiment of the present disclosure, a step of forming the first electrode contacting the power generation part including the silk yarns; and a step of forming the second electrode contacting the power generation part and spaced apart from the first electrode may be further included in the method. The first electrode may be formed on the wet surface of the power generation part, and the second electrode may be formed on the dry surface thereof.

In one embodiment of the present disclosure, the power is generated from a potential difference between the potentials of the first electrode and the second electrode due to a difference between wetness of the first electrode and wetness of the second electrode that contact the wet surface and the dry surface, respectively. The generated power may be transmitted to an external load via the connection circuit connected to the power generation part. Since the power generation process and principle are the same as those mentioned above, a detailed description thereof will be omitted.

Furthermore, the present disclosure may provide a wearable device including the transpiration-driven power generation device with improved washing resistance and conductivity as manufactured by the above manufacturing method.

Furthermore, the present disclosure may provide a floating structure on a sea including the transpiration-driven power generation device with improved washing resistance and conductivity as manufactured by the above manufacturing method.

The wearable device according to an embodiment of the present disclosure includes the transpiration-driven power generation device with improved washing resistance and conductivity; and a power storage device connected to the connection circuit of the power generation device and configured to power thereof, wherein the power storage device may further include a power conversion unit that converts the received power into usable electricity.

The floating structure on a sea according to an embodiment of the present disclosure includes the transpiration-driven power generation device with improved washing resistance and conductivity; and a power storage device connected to the connection circuit of the power generation device and configured to power therefrom, wherein the power storage device may further include a power transmission unit that transmits electric energy stored in the power storage device to a load.

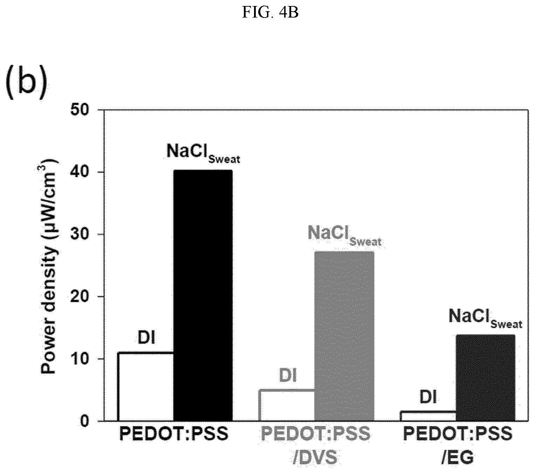

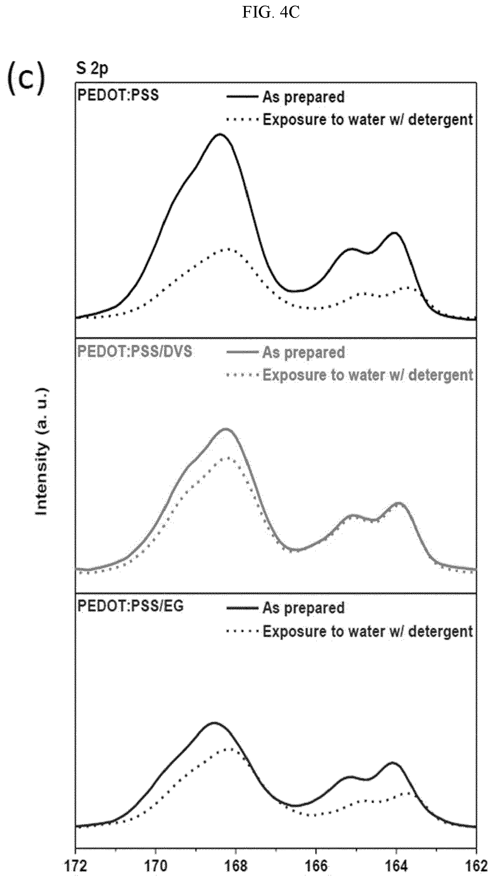

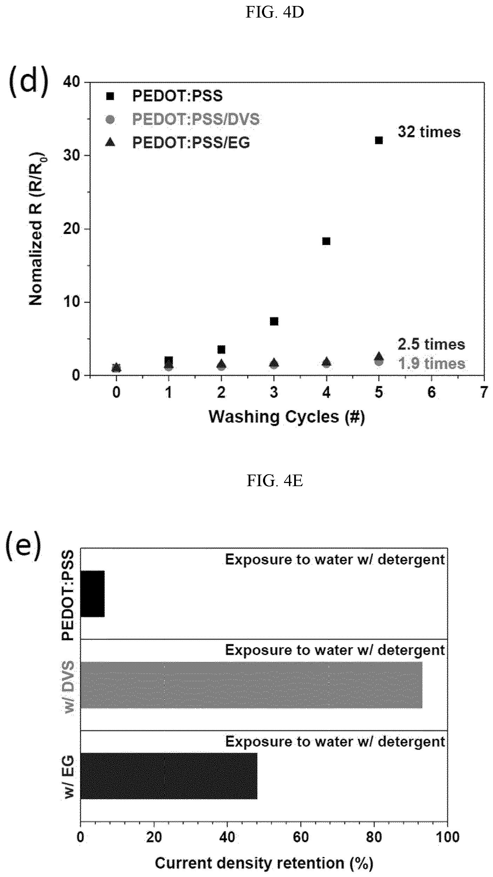

FIGS. 4 to 6 are graphs showing experimental results on a power generation device according to an embodiment of the present disclosure.

### Energy generation performance and washing resistance results

FIG. 4A and FIG. 4B are graphs showing the results of measuring the energy generation performance of the power generation device according to an embodiment of the present disclosure.

Specifically, FIG. 4A shows X-ray photoelectron spectroscopy (XPS) measurement data indicating the change in negatively charged PSS due to the addition of DVS or ethylene glycol (EG) to PEDOT:PSS.

In other words, FIG. 4A shows the XPS result measured for comparison between the effects of DVS and EG on control of the amount of the negatively charged PSS or a peak intensity thereof which plays an important role in the TEPG device based on PEDOT:PSS.

Referring to FIG. 4A, it may be identified that the peak of PEDOT:PSS decreases by using DVS and EG, wherein EG decrease PSS which plays an important role in TEPG in a larger amount than DVS decreases PSS. This suggests that DVS acts as a more suitable material for TEPG.

FIG. 4B is a graph of the power density as the energy generation performance of the power generation device.

Referring to FIG. 4A and FIG. 4B, the correlation between the PSS peak intensity and the energy generation performance may be identified from the XPS measurement results. It may be identified that the PSS peak intensity of PEDOT:PSS > the PSS peak intensity of PEDOT:PSS-DVS > the PSS peak intensity of PEDOT:PSS-EG. The trend in the energy generation performance is identical with the trend in the PSS peak intensity.

FIG. 4C to FIG. 4E are graphs showing the washing resistance of the power generation device according to one embodiment of the present disclosure.

Specifically, FIG. 4C is a graph showing the XPS results before and after washing.

Referring to FIG. 4C, it may be identified that in the case of PEDOT:PSS, the intensities of PEDOT and PSS are significantly reduced after washing. This means the low washing resistance of the PEDOT:PSS. Thus, the PEDOT:PSS is detached from the silk yarn after washing. In contrast, a state in which each of PEDOT:PSS-DVS and PEDOT:PSS-EG is attached to the silk yarn is maintained even after washing. In particular, PEDOT:PSS-DVS has high washing resistance due to the influence of the covalent bond.

FIG. 4D is a graph measuring the change in electrical resistance of each sample based on the number of washings.

Referring to FIG. 4D, it was identified that the electrical resistance of PEDOT:PSS increased by 32 times after 5 washing, whereas the electrical resistance of PEDOT:PSS-EG increased by 2.5 times after 5 washing, and the electrical resistance of PEDOT:PSS-DVS increased by 1.9 times after 5 washing. This means that PEDOT:PSS-DVS has better washing stability than that of each of other samples.

FIG. 4E is a graph showing the energy generation performance after washing.

Referring to FIG. 4E, it may be identified that after washing, the performance of PEDOT:PSS decreased to about 6.4% relative to the initial value before washing; after washing, the performance of PEDOT:PSS-EG decreased to about 48% relative to the initial value before washing; and after washing, the performance of PEDOT:PSS-DVS decreased to about 93% relative to the initial value before washing. This means that PEDOT:PSS-DVS has high washing stability at which the PEDOT:PSS-DVS may maintain high energy generation performance even after washing.

### Energy generation performance results in DI water and NaCl environments

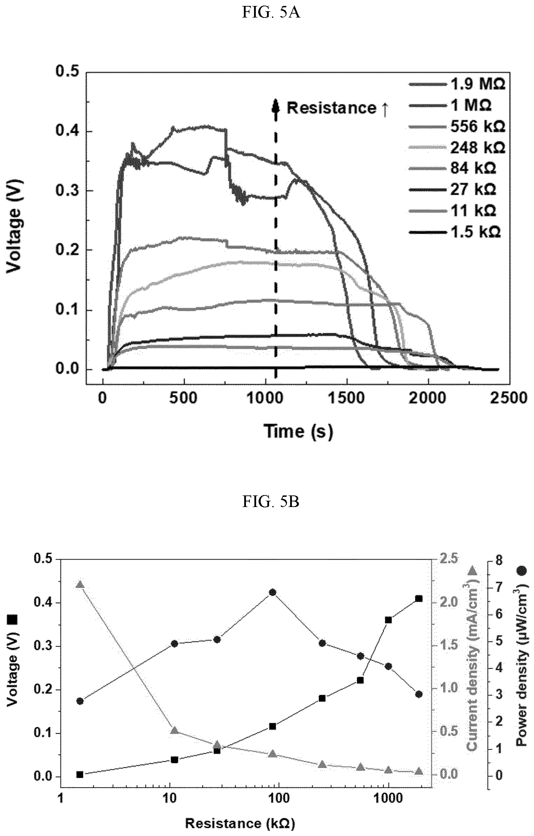

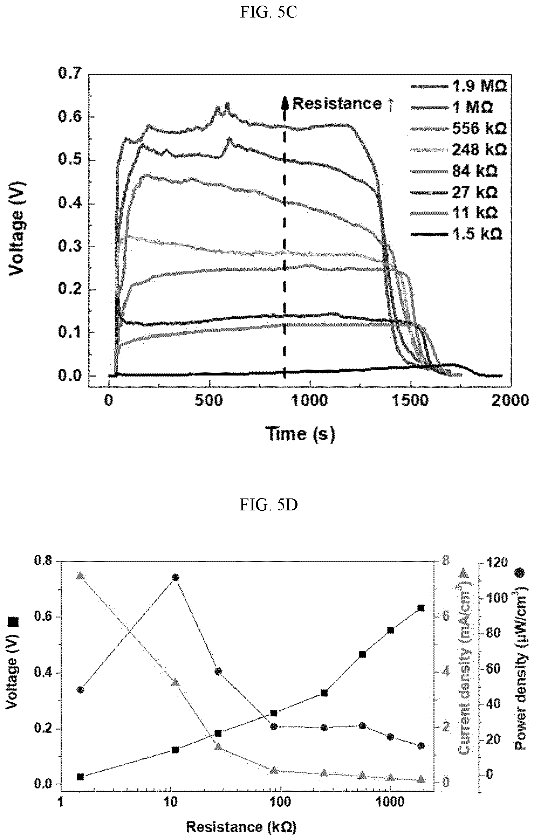

FIG. 5 is a graph showing the energy generation performance results of the power generation device according to one embodiment of the present disclosure in DI water and NaCl environments.

Specifically, FIG. 5A is a graph showing the voltage generated using DI water.

Referring to FIG. 5A, it may be identified that the generated voltage increases as the electrical resistance increases. Furthermore, the silk yarns coated with PEDOT:PSS-DVS achieves continuous voltage generation for more than 1500 seconds using a small amount of water of 5 ul.

FIG. 5B is a graph showing the voltage, current, and power density performance based on the electrical resistance of PEDOT:PSS-DVS using DI water.

Referring to FIG. 5B, as the electrical resistance increases, the voltage increases, but the current decreases. This indicates that it is important to evaluate the energy generation performance based on the electrical resistance. When DI water is used, a power density of about 6.844 µW/cm³ may be generated at about 87 kQ.

FIG. 5C is a graph showing the voltage generation of PEDOT:PSS-DVS measured when NaCl of a concentration equal to a concentration of NaCl in the sweat is added to DI water.

FIG. 5D is a graph showing the voltage, current, and power density generated based on the electrical resistance of PEDOT:PSS-DVS measured when NaCl of a concentration equal to a concentration of NaCl in the sweat is added to DI water.

Referring to FIG. 5D, when NaCl of a concentration equal to a concentration of NaCl in the sweat was added to DI water, the optimized power density of 111.91 µW/cm³ was generated at 11kΩ.

Referring to FIG. 5C and FIG. 5D, as the electrical resistance increases, the voltage increases, but the current decreases. This indicates that it is important to evaluate the energy generation performance based on the electrical resistance. It may be identified that when NaCl of a concentration equal to a concentration of NaCl in the sweat was added to DI water, the power density of 111.91 µW/cm³ was generated at 11kΩ.

In FIG. 5C and FIG. 5D, the reason for measuring the performance using the DI water to which NaCl of a concentration equal to a concentration of NaCl in the sweat is added is that the power generation device including the silk yarns coated with PEDOT:PSS-DVS may be used as the wearable power device. Thus, the above result suggests the possibility that the power generation device including the silk yarns coated with PEDOT:PSS-DVS may be driven using the sweat generated during actual exercise.

### Amplification of energy generation performance

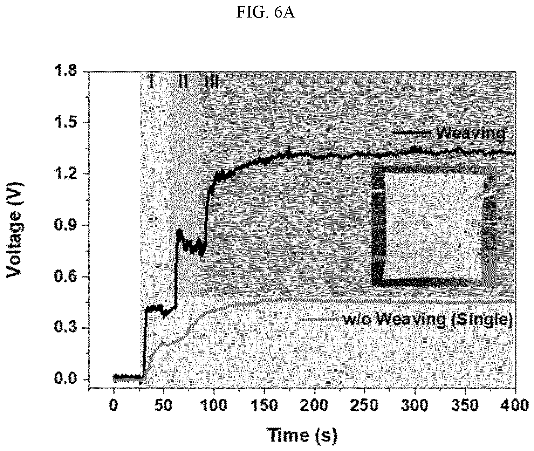

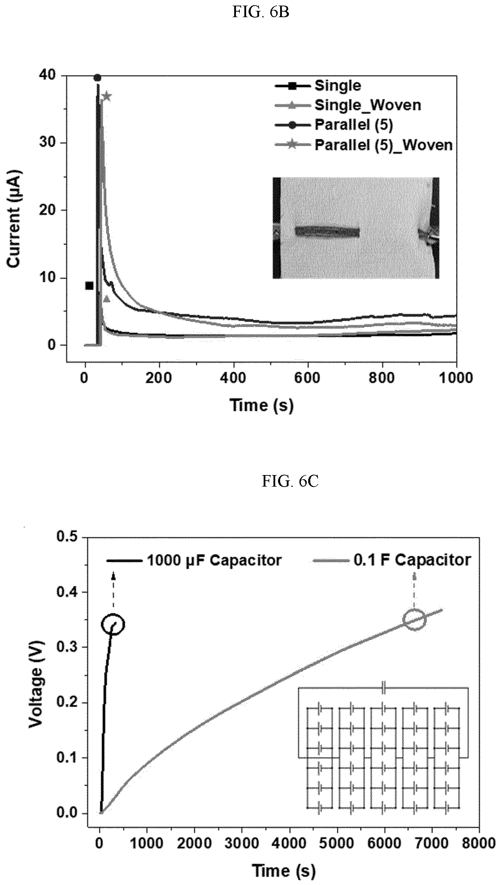

FIG. 6 is a graph showing the amplification of energy generation performance.

Specifically, FIG. 6A is a graph showing the amplification of voltage generated when three single yarns are connected in series to a waterproof cloth.

FIG. 6B is a graph showing the amplification of current generated when five single yarns are connected in parallel to a waterproof cloth.

Referring to FIG. 6A and FIG. 6B, it may be identified that voltage and current may be effectively amplified when the yarns are connected in series or parallel with the cloth.

FIG. 6C is a graph showing the change in voltage when actually charging a capacitor when the silk yarns coated with PEDOT:PSS-DVS are connected in series and parallel to a waterproof cloth.

Referring to FIG. 6C, it may be identified that power may be generated, stored, and utilized using the silk yarns coated with the PEDOT:PSS-DVS.

As a result, it may be identified through FIG. 6 that the series and parallel connections of the power generation devices including the silk yarns may effectively amplify voltage and current, and thus the capacitor may be charged therewith.

Although embodiments of the present disclosure have been described with reference to the accompanying drawings, embodiments of the present disclosure are not limited to the above embodiments, but may be implemented in various different forms. A person skilled in the art may appreciate that the present disclosure may be practiced in other concrete forms without changing the technical spirit or essential characteristics of the present disclosure. Therefore, it should be appreciated that the embodiments as described above is not restrictive but illustrative in all respects.

## Claims

1. A transpiration-driven power generation device with improved washing resistance and conductivity, the transpiration-driven power generation device comprising:
a power generation part including silk yarns;
a first electrode contacting the power generation part;
a second electrode contacting the power generation part and spaced apart from the first electrode; and
a connection circuit electrically connecting the first electrode and the second electrode to each other,
wherein the power generation part includes a power generation material including poly(3,4-ethylenedioxythiophene)-poly(styrenesulfonate) (PEDOT:PSS) and a divinyl sulfone (DVS) as a crosslinker.

2. The transpiration-driven power generation device of claim 1, wherein a covalent bond is formed between the PSSs of the PEDOT:PSSs via the DVS.

3. The transpiration-driven power generation device of claim 1, wherein the power generation material is applied on the silk yarns.

4. The transpiration-driven power generation device of claim 1, wherein the first electrode contacting the power generation part is formed on a wet surface of the power generation part wet with water,
wherein the second electrode spaced from the first electrode is formed on a dry surface of the power generation part free of water.

5. The transpiration-driven power generation device of claim 4, wherein the power is generated from a potential difference between a potential of the first electrode and a potential of the second electrode due to a difference between wetness of the first electrode and wetness of the second electrode contacting the wet surface and the dry surface, respectively,
wherein the generated power is output through the connection circuit.

6. The transpiration-driven power generation device of claim 5, wherein liquid absorbed on the wet surface is a liquid in which NaCl is dissolved.

7. A method for manufacturing a transpiration-driven power generation device with improved washing resistance and conductivity, the method comprising:
a first step of mixing poly(3,4-ethylenedioxythiophene)-poly(styrenesulfonate) (poly(3,4-ethylenedioxythiophene)-poly(styrenesulfonate) (PEDOT:PSS) and a divinyl sulfone (DVS) as a crosslinker with each other to prepare a PEDOT:PSS-DVS solution; and
a second step of applying the PEDOT:PSS-DVS solution prepared in the first step to silk yarns.

8. The method for manufacturing the transpiration-driven power generation device of claim 7, wherein the first step further includes stirring the prepared PEDOT:PSS-DVS solution for 25 to 35 minutes.

9. The method for manufacturing the transpiration-driven power generation device of claim 7, wherein the second step includes:
coating the silk yarns with the PEDOT:PSS-DVS solution by dipping the silk yarns into the PEDOT:PSS-DVS solution; and
drying the coated PEDOT:PSS-DVS solution in an oven at 50 to 70°C for 25 to 35 minutes, thereby producing a power generation material including the silk yarns and the PEDOT:PSS-DVS coated thereon.

10. The method for manufacturing the transpiration-driven power generation device of claim 7, wherein the method further comprises, after the second step, a third step of weaving the silk yarns having the PEDOT:PSS-DVS coated thereon with each other to form a fabric.

11. The method for manufacturing the transpiration-driven power generation device of claim 7, wherein the method further comprises:
a step of providing a power generation part including the power generation material;
a step of forming a first electrode contacting the power generation part; and
a step of forming a second electrode contacting the power generation part and spaced apart from the first electrode,
wherein the first electrode is formed on a wet surface of the power generation part, and the second electrode is formed on a dry surface of the power generation part.

12. A wearable device comprising:
the transpiration-driven power generation device having improved washing resistance and conductivity according to claim 1; and
a power storage device connected to the connection circuit of the power generation device and configured to power therefrom,
wherein the power storage device further includes a power conversion unit configured to convert the received power into usable electricity.

13. A floating structure on a sea comprising:
the transpiration-driven power generation device having improved washing resistance and conductivity according to claim 1; and
a power storage device connected to the connection circuit of the power generation device and configured to power therefrom,
wherein the power storage device further includes a power transmission unit configured to transmit electric energy stored in the power storage device to a load.
